# EUROPEAN PATENT SPECIFICATION

(11) **EP 4 106 568 B1**
(45) Date of publication and mention of the grant of the patent: **03.09.2025**
(21) Application number: 21707649.6
(22) Date of filing: 19.02.2021
(51) Int. Cl.: A41D 13/015, A42B 3/12, A42B 3/00, E04F 15/18, E04F 15/22

(54) **HEADGEAR WITH SHOCK-ABSORBING MATERIAL**
KOPFBEDECKUNG MIT STOSSDÄMPFUNGSMATERIAL
COUVRE-CHEF AVEC MATÉRIAU ABSORBANT LES CHOCS

(30) Priority: 21.02.2020 SE 2050195; 21.02.2020 SE 2050196
(43) Date of publication of application: 28.12.2022
(60) Divisional application: 24158636.1
(73) Proprietor: Cenesy AB, 182 66 Djursholm (SE)
(72) Inventor: VON HOLST, Hans, 182 66 DJURSHOLM (SE)
(74) Representative: Noréns Patentbyrå AB
(86) International application number: PCT/EP2021/054198
(87) International publication number: WO 2021/165492

(56) References cited:
- EP-A1- 2 399 470
- WO-A1-2010/082537
- US-A- 3 877 076
- US-A1- 2002 142 129
- US-A1- 2015 082 523
- US-A1- 2018 153 237
- US-B2- 6 567 993

## Description

### Field of the invention

This invention relates to a shock-absorbing material used in a soft head-worn device.

### Background

Serious head injuries, such as traumatic brain injuries, occur in traffic, in the workplace and during sports activities. There is still an unacceptable number of head injuries worldwide. There is a need for an improved helmet, in particular a helmet that absorbs oblique impacts, that is, impacts that are not perpendicular to the surface of the helmet. Thus, it would be advantageous to prevent traumatic brain injuries by an improved head worn device.

Traumatic brain injury may lead to serious injuries or death. Traumatic brain injury in the elderly is often caused by falling. The incidence is about 140 cases per 100 000 persons per year, causing great stress on the healthcare system.

It would be advantageous to prevent traumatic brain injury caused by falling.

US6567993 discloses a headband that can be used for preventing head injuries, where the head-band comprises a shock-absorbing pad comprising outward-extending shock-absorbing structures.

Hence there is need for an improved material that absorbs shocks.

### Summary of the invention

In a first aspect of the invention there is provided soft head-worn item comprising an elastomeric sheet with a thickness of from 5 mm to 20 mm, the elastomeric sheet having a first side and a second side, where the first side has a plurality of deformable support members where the support members have a cavity with an opening towards the second side of the elastomeric sheet, or where the support members have an aperture from the fist side to the second side, and where the hardness of the material of the elastomeric sheet is from 40 Shore A to 80 Shore A, where the soft head worn device comprises an inner layer that is arranged to rest against the head of the user and a mesh layer in contact with the elastomeric layer between the elastomeric sheet and the inner layer where the mesh layer is provided in contact with the support members.

Further aspects and embodiments are provided in the dependant claims.

### Drawings

The accompanying drawings form a part of the specification and schematically illustrate preferred embodiments of the invention, and serve to illustrate the principles of the invention.
Fig. 1 is a schematic side view of an elastomeric sheet.
Figs. 2a-d are schematic views of first sides of elastomeric sheets.
Figs. 3-4 shows an elastomeric sheet.
Fig. 5 is a cross section of an elastomeric sheet along lines a-a of Fig. 4.
Fig. 6 is a schematic cross section of an elastomeric sheet along lines b-b of Fig. 5.
Fig. 7 is a schematic cross section of a helmet, not forming part of the claimed invention.
Fig. 8 is a cross section of a helmet.
Fig. 9 shows an elastomeric sheet.
Fig. 10 is a cross section of an elastomeric sheet along lines c-c of Fig. 9.
Fig. 11 is a cross section of an elastomeric sheet along lines d-d of Fig. 9.
Fig. 12 and 13 are cross sections of an elastomeric sheet that shows how it behaves during impact in a test setup.
Figs. 14-17 are schematic cross sections of a part of a head worn device.
Fig. 18 is a cross section of a of a part of a head worn device.
Fig. 19 is a cross section of a part of a head worn device.
Fig. 20 is a schematic drawing of a mesh.
Figs. 21-22 shows a head band.
Fig. 23 is cross section of a head band indicated by arrows in Fig. 22.
Fig. 24 is a cross section of a head band.
Fig. 25 is a photo of a mesh material.

### Detailed description

The elastomeric sheet 2 may be used for a wide range of applications where it is useful to dampen shock. Examples of applications include flooring, protective clothing such as a helmet, a hat or a headband and sports equipment, for example a horseshoe, or in machinery. The claimed invention is, however, limited to a soft head-worn item.

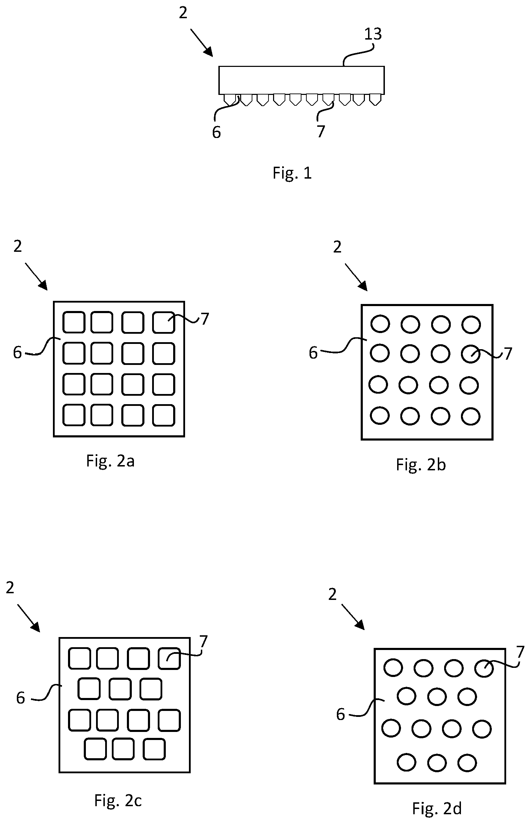

With reference to Figs. 1 and 2a-d the elastomeric sheet 2 has a plurality of deformable support members 7 said support members 7 being configured to be deformed upon shock (mechanical shock). The elastomeric sheet 2 has first side 6 that has support members 7 and a second side 13 that is essentially flat.

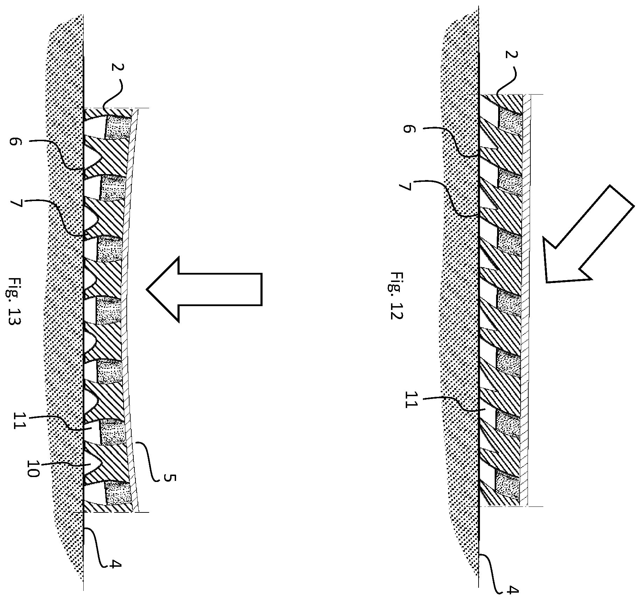

The support members 7 are configured to be deformed when the elastomeric sheet 2 receives an impact (see below with reference to Figs. 12-13, 29-30 and 37-38). The main purpose of elastomeric sheet 2 is to provide shock absorption, that is, to absorb the energy of an impact. This is achieved by the selection of the material of elastomeric sheet 2 and the deformable supports members 7.

The hardness of the material of the elastomeric sheet 2 is preferably from 40 Shore A to 80 Shore A, even more preferably from 50 Shore A to 60 Shore A, and most preferably from 53 Shore A to 58 Shore A. Permeably the elastomeric sheet 2 is made from one material with a defined harness, hence the hardness of the elastomeric sheet 2 is preferably uniform.

The elastomeric sheet 2 may be made from rubber or any other suitable elastomer. The elastomer may be a polymer. Suitable elastomers include various rubber materials for example: styrene butyric rubber, butyric rubber, isoprene rubber, butylic rubber, eten propene rubber, nitrilic butadiene rubber, chloroprene rubber, polyurethane rubber, acryl eten rubber and propene oxide rubber. Butyl rubber (IIR) is a preferred material.

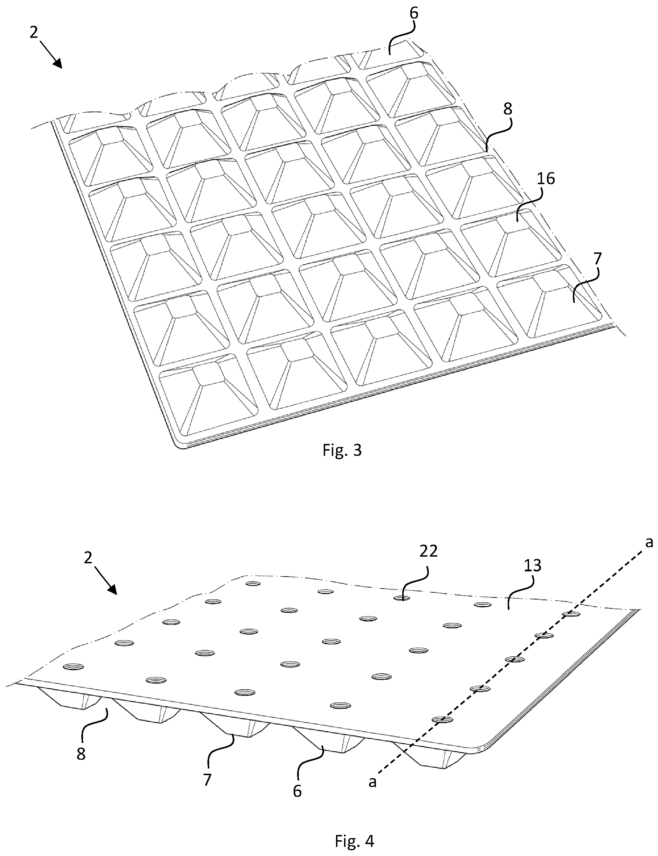

It is preferred that the elastomeric sheet 2 and the support members 7 are essentially solid, that is that they are essentially made of a solid material. However, each of the support members 7 may have at least one cavity 17 or aperture 11 as shown in for example Figs. 4-6 and 9-10 and 34-35. As used herein the cavity 17 only has an opening to one of the sides of the elastomeric sheet 2, whereas an aperture 11 has openings towards both sides of the elastomeric sheet 2.

The support members 7 may be arranged in any suitable pattern. Non-limiting examples of shapes and arrangements of support members 7 are shown in Figs. 2a-2d. The support members 7 can have any suitable shape such as oval, circular etc. The distance between the members 7 may for example 10-20 mm (c/c), preferably 13-18 mm. The thickness 21 of the elastomeric sheet 2 is preferably from 5 - 20 mm. The height 20 of the support members 7 in relation to the total thickness 21 of the elastomeric sheet 2 may be 25-90 %, of the total thickness of the elastomeric layer 2.

It is preferred that the support members 7 are narrowing towards the tip of the support member 7. Hence the base of the support member 7 is preferably wider than the tip. The support members 7 have an aperture 11 from the fist side to the second side or a cavity 17 which is open to the second side. The purpose of aperture 11 or cavity 17 is to provide springiness to the elastomeric sheet 2 and to reduce weight.

The elastomeric sheet 2 may be used in various applications where it is useful to dampen shock such as in clothing, sports equipment, flooring, helmet or machinery. The claimed invention is, however, limited to a soft head-worn item.

With reference to Figs. 3-6, which shows a preferred embodiment of the elastomeric sheet 2, the support members 7 are preferably square, and pyramid shaped and arranged in a matrix pattern. The top of the pyramid-shaped support members 7 may have a flat surface 16. The pyramid shaped support members may have four sides, thus having a square base as show in the Figs. 3-6 but they may also have three sides (the base of the support member is then triangular). The angle of the side of the pyramid-shaped support members may be from 40° to 50° in relation the second side 13.

The height 20 of the support members 7 in relation to the total thickness 21 of the elastomeric sheet 2 may be 25-90 %, more preferably 50% -90%, more preferably 70-90 % of the total thickness of the elastomeric layer 2. The thickness 21 of the elastomeric sheet 2 is preferably from 5 to 20 mm, more preferably 6 to 10 mm and most preferably from 6 mm to 9 mm. For example, the total thickness 21 of the elastomeric layer 2 may be from 6 to 9 mm and the height 20 of the support members 7 may be from to 4.2 mm to 8.1 mm.

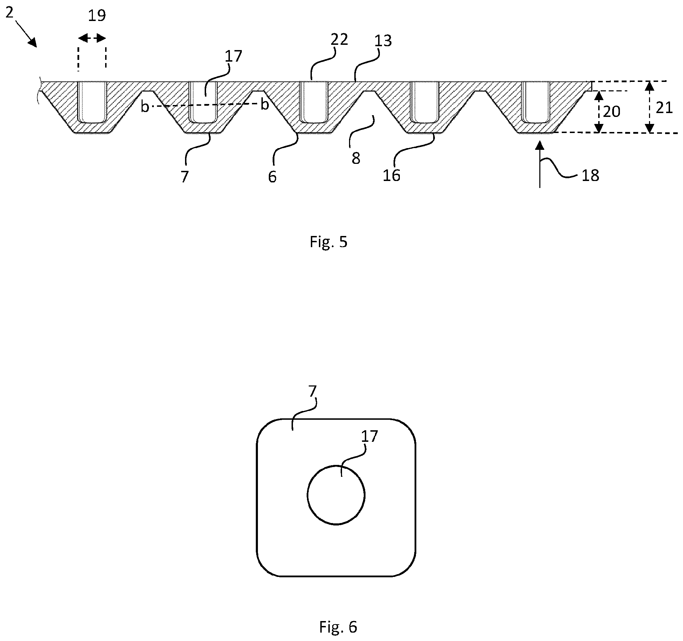

The support members 7 may be essentially solid as shown in Figs. 3-6. It is preferred that the otherwise solid support members 7 have a cavity 17. The cavity 17 is preferably located in the middle of the support member (Fig. 6) when the support member 7 is observed from direction of arrow 18 in Fig 5 (central location of cavity 17). The cavity 17 may have any suitable shape but is preferably cylinder shaped.

The cavity 17 has at least one opening 22 on the first side 6 or the second side 13, and in Figs. 3-6 it is shown how the cavity 17 has one opening 22 on the second side 13. The main direction of cavity 17 is preferably perpendicular to the main plane of the elastomeric sheet 2. The cavity 17 may be in the form of a cylinder-shaped cavity 17 that opens towards the second side 13 as shown in Figs. 3-6. The width 19 of the cavity is preferably the same along the height of the support member 7 as shown in Fig 5. The diameter of the cavity when it is cylinder shaped may be from 2 mm - 4 mm. The depth of the cavity may preferably be from 2 to 4 mm.

The volume of the cavity 17 is preferably at most 50 %, more preferably at most 40 % and even more preferably at most 30 % of the volume of the support member 7. The volume of the support member is calculated as the part of the support member 7 that is indicated by arrow 20.

### Head-worn device

The head worn device may be a helmet, a hat or a head band. The claimed invention is, however, limited to a soft head-worn item.

The head worn device can be worn by a user to protect the user during sports activities (biking, skiing, riding, for example), in the workplace (such as at construction sites) or in traffic (such as by motorcyclists), or otherwise. When the head worn device is a hat or a headband it may particularly be useful in everyday use by the elderly, or by persons with poor balance.

The head worn device will now be described in more detail mainly in reference to a helmet. However, it is noted that the claims are directed to a soft head worn device and not a helmet.

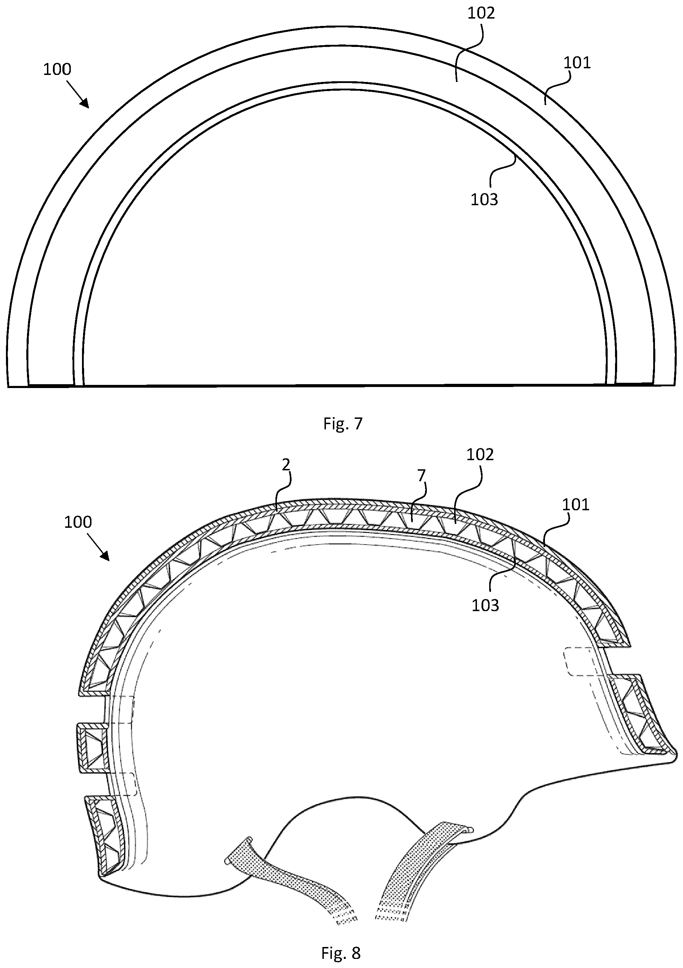

Fig 7. shows a head worn device 100 which is a helmet, which does not form part of the claimed invention. The helmet comprises outer layer 101, shock absorbing layer 102 and optional inner layer 103. It should be observed that, for clarity, the thickness of the layers is exaggerated in Fig. 7. The outer layer 101 and the inner layer 103 are referred to herein as "second layer".

The outer layer 101 is preferably in the form of a hard shell. The outer layer 101 may be formed in a polymer material such as for example polycarbonate, polyvinylchloride or ABS and may be reinforced with fibers such as carbon fibers or Kevlar^{™}. The outer layer 101 is preferably thinner than the shock-absorbing layer 102. The outer layer 101 may serve the purpose of distributing the shock of an impact to shock absorbing layer 102. The outer layer 101 may also provide protection against perforation, such as cuts.

The optional inner layer 103 is suitable for resting against the head of a user and is preferably comfortable for the user. The inner layer 103 may be adjustable in order to provide a snug fit on the head of the user. Hence inner layer 103 may be loosely fitted to shock absorbing layer 102 in order to be adjustable to the head of the user. Inner layer 103 may comprise an adjustable band that is circumferential in relation to the head of the user, in order to adjust the helmet to the head of the user.

The helmet may preferably have an attachment device for attaching the helmet to the head. The attachment device is preferably a chin strap.

The outer layer 101, the inner layer 103 and the shock absorbing 102 layer are preferably attached to each other. One or more layers may for example be glued together, in particular outer layer 101 and shock absorbing layer 102. The outer layer 101 is preferably thinner than the shock-absorbing layer 102 and may have a thickness of approximately 1-4 mm or 2-3 mm. The inner layer 103 is also preferably thinner than the shock-absorbing layer 102 and may have a thickness of 1 - 4 mm or 2-3 mm.

It should be noted that each layer of the helmet may comprise additional layers providing different functions as strength, shock, water proofing, insulation, colour, attachment between layers (such as glue) or adjustability of helmet.

The shock absorbing layer 102 comprises at least one layer of an elastomeric sheet 2.

The shock absorbing layer 102 preferably comprises one or two or more of the elastomeric sheets 2 as described below. The thickness of the shock absorbing layer 102 is preferably from 5-40, more preferably from 8-30 mm and even more preferably from 16-24 mm.

In a preferred example the elastomeric sheet 2 of the helmet has the shape and dimensions described with reference to Figs 3-6 (pyramid shaped supports 7 with cavity 17). An example of such a helmet is shown in Fig. 8.

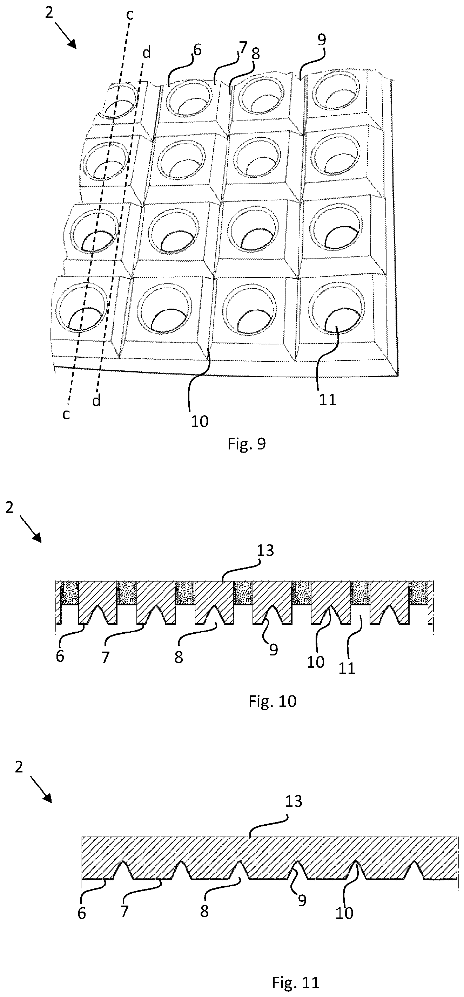

Figs. 9-11 shows one embodiment of the support members 7 where the support members have a square configuration (grooves meet at 90° angles) and have apertures 11.

In an alternative embodiment and with reference to Figs. 9-11 the height of the support members 7 in relation to the total thickness of the elastomeric sheet 2 may be 25% -75%, more preferably 30-60 % of the total thickness of the elastomer layer 2.

With reference to Figs. 9-11, the support members 7 may for example have the shape of members separated by grooves 8 in a criss-cross pattern. The grooves 8 may have a depth which is 25 % to 75 %, more preferably 30% -60% of the total thickness of the elastomeric sheet 2. The grooves 8 may for example have a depth of for example 4-6 mm. The grooves 8 may have a width of 3-8 mm, preferably 4-6 mm. The walls 9 of the grooves may be slanted as shown in Figs. 9-11 such that the profile of the grooves 8 is conical. The grooves 8 may have a flat or a pointed bottom 10 (where a pointed bottom is shown in Figs. 9-11.

The thickness of the elastomeric sheet 2 shown in Figs 9-11 is preferably from 5 to 20 mm, more preferably 8-15 mm, even more preferably 8-12 mm. The elastomeric sheet 2 is preferably provided with through holes or apertures, hereafter referred to as apertures 11. The apertures 11 go from the first side 6 of the elastomeric sheet 2 to the second side 13 of the elastomeric sheet 2. Apertures 11 are preferably perpendicular to the elastomeric sheet 2. The apertures 11 may have a diameter of from 4-7 mm and may be spaced for example 10-20 mm (c/c), preferably 13-18 mm apart. The shortest distance between the holes may be 6-10 mm. The apertures 11 may be placed in the centre of the support members 7, as shown in Figs. 46-48.

Figs. 12-13 show how the elastomeric sheet 2 of Figs 9-11 behaves upon receiving an oblique shock (Fig. 12) or a translational shock (Fig. 13) in a test set-up. The sheet 2 is covered by a shock-distributing layer which may mimic the behaviour of outer layer 101 of helmet 100 in that it distributes the shock to the elastomeric sheet 2. The elastomeric sheet 2 is placed on a hard surface 4 and a weight is allowed to fall onto the surface 5 of the sheet 2. The arrows indicate the direction of impact on the shock-distributing layer 5 of the sheet 2.

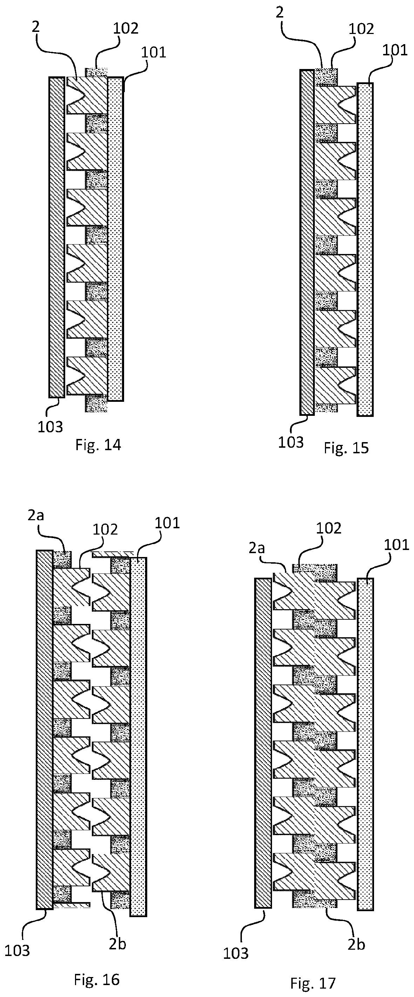

Figs. 14 to 17 show cross sections of a head worn device 100. Figs 14 and 15 show embodiments with one elastomeric sheet 2, where the support members 7 of the elastomeric sheet points towards the inner layer 103 and the outer layer 101, respectively.

In Fig. 16, two elastomeric sheets 2a, 2b are arranged with the supporting members 7 pointing towards each other thereby forming a shock-absorbing layer 102 between outer layer 101 and inner layer 103.

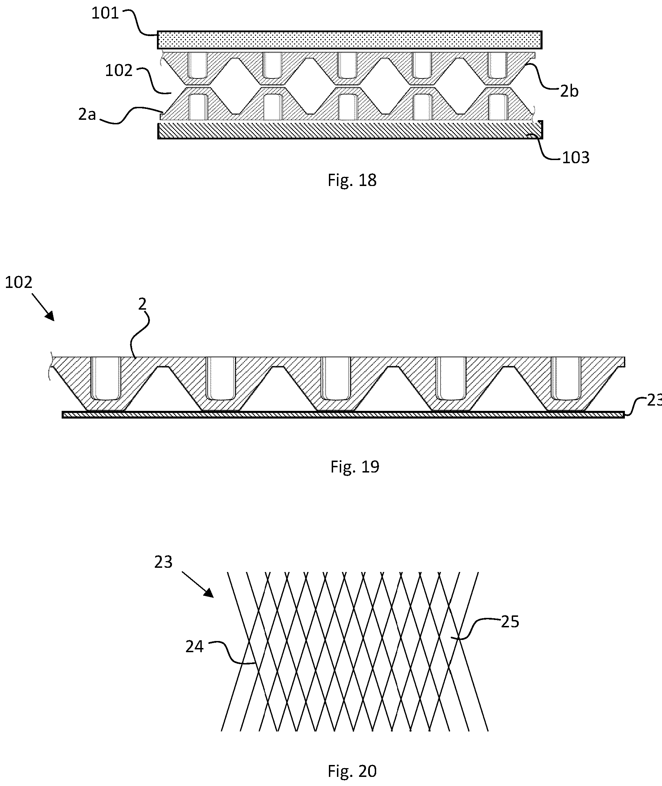

Fig. 18 shows an embodiment double layer of the material of Figs. 3 to 6 where the support members are pointing towards each other. It may be preferred that the tips of the support members 7 (for example flat surface 16) rests against each other.

In Fig. 17 the support members 7 are pointing in opposite directions, as one set of support members 7 point towards the inner layer 103 and one set of support members 7 point out towards the outer layer 101. With reference to Figs 16-17 it should be noted that the support members 7 of elastomeric sheets 2a, 2b may also point in the same direction. When two or more elastomeric layers 2a, 2b are used they may optionally be attached to each first or second surfaces 6,13, for example with glue. Hence the plurality of elastomeric layers 2a, 2b may form a sandwich material. The plurality of elastomeric layers 2a, 2b may be essentially immobile in relation to each other.

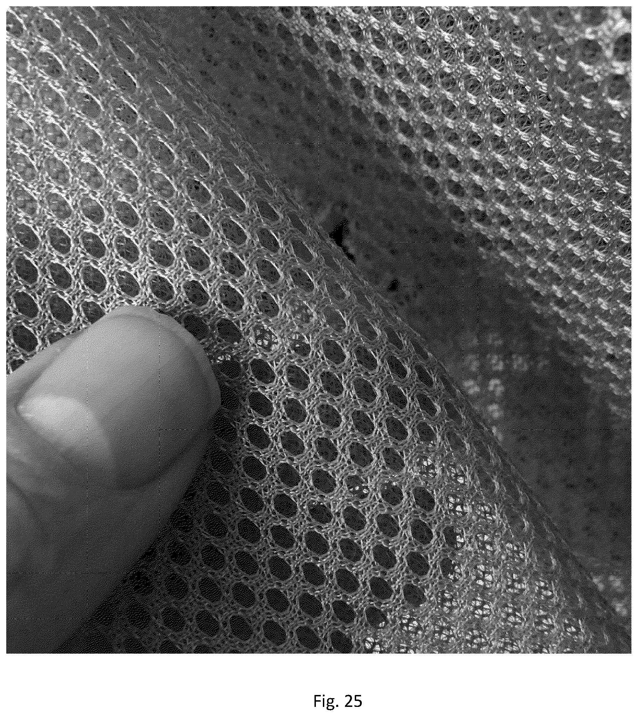

When the helmet does not have inner layer 103 the shock absorbing layer 102 will be in be in contact with the head of the user. Hence in certain examples the support members 7 may be in contact with the head of the user.
The shock absorbing layer 102 comprises a mesh layer 23 in contact with the elastomeric layer. Hence the elastomeric layer 2 is combined with a mesh layer 23, preferably a textile mesh. The mesh layer 23 is preferably one single mesh layer 23. The mesh layer 23 may be able to slide against elastomeric layer 2. The mesh layer 23 may have thickness of from 0.2 to 5 mm, more preferably from 0.5 mm to 3 mm. The mesh layer 23 has the advantage of absorbing oblique shocks when combined with elastomeric layer 2. The mesh layer 23 may be pliable. The mesh 23 may be stretchable. The mesh 23 may be made from any suitable material such as nylon or polyester. The mesh 23 may be produced using any suitable technology such as extrusion, weaving or knitting. The size of the openings 25 in the mesh may be for example 0.5 mm to 3 mm. Hence the individual strings in the mesh 23 may be separated by at most 0.5 mm to 3 m. The openings 25 in the mesh 23 may for example be rhomboids or rectangles or quadrats. An example of a rhomboid mesh material is shown in Fig. 20. The mesh layer 23 preferably has low friction towards the elastomeric layer 2. The mesh 23 may be a mesh where the mesh material 24 (for example strings that form the mesh) covers at least 20%, more preferably at least 30 % and most preferably at least 50 % of the surface of the mesh material. Fig. 25 shows an example of a suitable mesh material where mesh material covers 24 at least 30% or more of the surface of the mesh material. Hence the openings 25 are at most 70 % of the surface of the mesh material.

The mesh may provide slidability in relation to elastomeric layer 2. The mesh layer 23 is preferably arranged between the support members 7 and the head of the user of the head-worn device 100.

The mesh layer 23 may be used for example together with a helmet 100 or other head worn device or other type of protective covering. The combination of the elastomeric layer with the mesh layer 23 is useful in any type of wearable shock protecting items such as for example helmets, hat, head band 26, shoulder pads, hip guards, or back protection items.

The head worn device 100 according to the claimed invention is a soft head-worn item such as a hat or a head band 26.

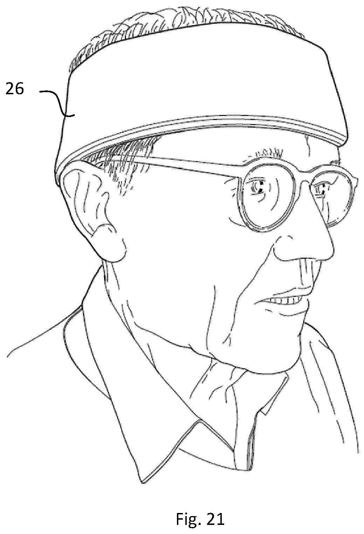

The term "soft head-worn item" refers to an item suitable to be worn on the head. An example of a head band 26 is shown in Figs. 21-24. A soft head worn device differs from a helmet in that the outer layer 101 is not hard as in the case of a helmet. Also, the soft head-worn device may lack an attachment device such as a chin strap. Instead, the soft head-worn item typically attach to the head by having a snug fit. A soft head-worn item, in particular a head band 26, may be more comfortable than a helmet for use among elderly in everyday situations.

The soft head-worn item 26 comprises at least one elastomeric sheet 2. There may be one or more sheets 2, and the combined thickness of the sheets 2 is preferably from 5 to 12 mm, i.e. somewhat slimmer than in the case of a helmet. The elastomeric layer 2 may for example have a thickness of from 4 to 12 mm in the case of a hat or a head band 26. But the dimensions and proportions described in relation to Figs. 3-6 may also be used. In addition, the soft head-worn item comprises at least one additional layer which may be made from for example cloth, such as wool, fleece, cotton or a synthetic polymer cloth, or other suitable material. The additional layer may be an outer soft layer 101 in addition to an inner layer 103. The additional layer may provide heat insulation, colour or provide a comfortable feeling to the head.

In a preferred embodiment the elastomeric sheet 2 of the soft head worn item is as described with reference to Figs. 3-6.

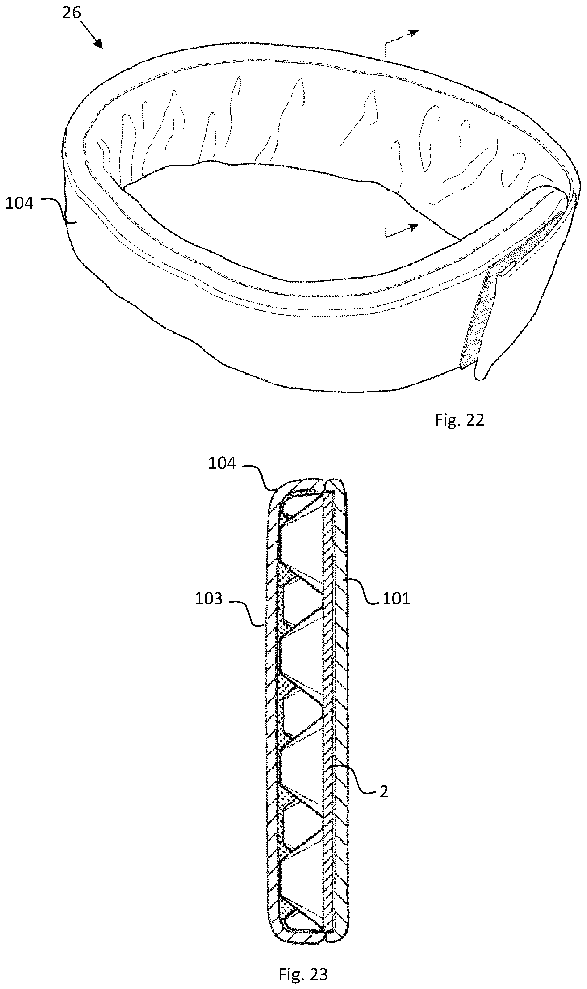

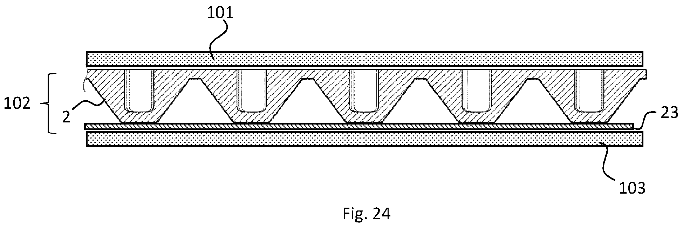

Fig.22-23 shows a soft head worn item, in this case a head band 26, that comprises an outer layer 101 and inner layer 103 band. Outer layer 101 and inner layer 103 form an outer covering 104 in which a strip of elastomeric sheet 2 is arranged. Outer layer 101 and inner layer 103 may be made from the same material (forming outer covering 104) and should provide a good feel towards the head and may also have a pleasant look. Outer layer 101 and inner layer 103 may for example be made from any suitable cloth or fabric commonly used for clothing such as polar fleece (Synchilla^{®}), nylon, wool or cotton. The elastomeric layer 2 is arranged with mesh layer 23 between elastomeric layer 2 and inner layer 103, as shown in Fig. 24.

Hence the head band 26 or other soft head-worn item comprises a strip of elastomeric sheet 2. The strip may have a width of from 5 to 10 cm, for example. The head band 26 is configured to be worn around the circumference of the head. The strip if elastomeric layer 2 does not necessarily have to go around the full circumference of the head. In particular the head band may be sized and located so that it protects the posterior part of the head thereby preventing injury in a backwards fall. It is preferred that the hat or the headband 26 protects the forehead and posterior part of the head.

The hat and the head band 26 may be provided in different sizes. The size of the hat and the head band 26 may be adjustable, with the use of a size adjustment device. The adjustment device adjusts the circumference of the hat or the head band 26. A headband 26 may have a holding part that goes over the top of the head, which prevents the headband from sliding down.

It is realized that everything which has been described in connection to one embodiment is fully applicable to other embodiments, as compatible. Hence, the invention is not limited to the described embodiments, but can be varied within the scope of the enclosed claims.

While the invention has been described with reference to specific exemplary embodiments, the description is in general only intended to illustrate the inventive concept and should not be taken as limiting the scope of the invention. The invention is defined by the claims.

### EXAMPLE 1

A material with the design of Figs 9-11 and 34-36 was formed from natural rubber with various degrees of hardness. The hardness was measured using Shore A methodology. The results are shown in Table 1.

**Table 1**

| | Shore A value | Standard deviation |
|---|---|---|
| Sample 1 | Sh40 | +/- 2-3% |
| Sample 2 | Sh50 | +/- 2-3% |
| Sample 3 | Sh60 | +/- 2-3% |
| Sample 4 | Sh70 | +/- 2-3% |

### EXAMPLE 2

A material (an elastomeric layer) was formed by using the material from Example 1 covered by 2 mm vinyl material.

The impact energy/acceleration was measured using a 3.9 kg dummy head that was allowed to fall 55 cm on to a stell plate surface covered by the material with 50 Shore A or a naked surface without the material. The impact was reduced with 55 % compared to no dampening material.

### EXAMPLE 3

A 6.5 kg steel body was allowed to fall onto the 50 Shore A material from 60 cm. The energy was reduced with 30% compared to control.

### EXAMPLE 4

An elastomeric layer with the shape of Figs. 3-6 was formed from butyl rubber (IIR). The material had a hardness of between 55 and 56 Shore A. The total thickness of the elastomeric layer was 7 mm and the height of the support members was 6 mm.

### EXAMPLE 5

A 3.9 kg dummy head containing an accelerometer was allowed to fall from 55 cm or 110 cm onto a steel plate. The sheet was attached to the dummy or the steel plate as described below. The steel plate was horizontal to achieve a straight impact or angled at 45° to obtain an oblique impact. The percentage dampening in relation to using no dampening material is shown in Table 2.

For head band trials a head band with outer covering, an elastomeric layer according to Example 5 and a pliable polymer mesh arranged between the deformable supports and the outer covering was attached to the dummy, and allowed to fall to the steel plate. A photo of the mesh material used is provided as Fig. 25. The deformable supports were directed upwards, towards the dummy.

For horseshoe trials, a regular metal horseshoe with an elastomeric layer with the support members directed upwards, was attached to the 3.9 kg dummy and allowed to fall to the steel plate. A regular steel horseshoe was used as control.

For floor trials the dummy was allowed to fall on to the steel plate which was covered by the material covered by a vinyl upper layer. The deformable supports were directed downwards.

Table 2 shows percentage decrease in acceleration force compared to control.

**Table 2**

| | Straight impact | | Oblique impact | |
|---|---|---|---|---|
| | 55 cm | 110 cm | 55 cm | 110 cm |
| Head band | 51% | 24% | 65% | 58% |
| Floor | 47% | 32% | 64% | 63% |
| Horseshoe | 54% | n.a | n.a | n.a |

## Claims

1. A soft head-worn item (26) comprising an elastomeric sheet (2) with a thickness of from 5 mm to 20 mm, the elastomeric sheet (2) having a first side (6) and a second side (13), where the first side (6) has a plurality of deformable support members (7) where the support members (7) have a cavity (17) with an opening towards the second side (13) of the elastomeric sheet (2), or where the support members have an aperture (11) from the fist side (6) to the second side (13), and where the hardness of the material of the elastomeric sheet (2) is from 40 Shore A to 80 Shore A, **characterized in that** the soft head worn device (26) comprises an inner layer (103) that is arranged to rest against the head of the user and a mesh layer (23) in contact with the elastomeric sheet (2) between the elastomeric sheet (2) and the inner layer (103) where the mesh layer (23) is provided in contact with the support members (7).

2. The soft head-worn item (26) of claim 1 where the hardness of the material is from 50 Shore A to 60 Shore A.

3. The soft head-worn item (26) of claim 1 or 2 where the support members (7) are essentially pyramid shaped.

4. The soft head-worn item (26) of any one of claims 1 to 3 where the height of the support members (7) in relation to the total thickness of the elastomeric sheet (2) is from 70 to 90 % of the total thickness of the elastomeric sheet (2).

5. The soft head-worn item (26) of any one of claims 1 to 4 where the width of the cavity (17) is the same along the depth of the cavity (17).

6. The soft head-worn item (26) of any one of claims 1 to 5 where the volume of the cavity (17) is at most 50 % of the volume of the support member (7).

7. The soft head-worn item (26) of any one of claims 1 to 6 which is a head band.

## Patentansprüche

1. Weicher, auf dem Kopf getragener Gegenstand (26), umfassend eine Elastomerplatte (2) mit einer Dicke von 5 mm bis 20 mm, wobei die Elastomerplatte (2) eine erste Seite (6) und eine zweite Seite (13) aufweist, wobei die erste Seite (6) eine Vielzahl von verformbaren Stützelementen (7) aufweist, wobei die Stützelemente (7) einen Hohlraum (17) mit einer Öffnung in Richtung der zweiten Seite (13) der Elastomerplatte (2) aufweisen, oder wobei die Stützelemente eine Öffnung (11) von der ersten Seite (6) zu der zweiten Seite (13) aufweisen, und wobei die Härte des Materials der Elastomerplatte (2) von 40 Shore A bis 80 Shore A beträgt, **dadurch gekennzeichnet, dass** der weiche, auf dem Kopf getragene Gegenstand (26) eine innere Schicht (103) umfasst, die so angeordnet ist, dass sie am Kopf des Benutzers anliegt, und eine Netzschicht (23) in Kontakt mit der Elastomerplatte (2) zwischen der Elastomerplatte (2) und der inneren Schicht (103), wobei die Netzschicht (23) in Kontakt mit den Stützelementen (7) vorgesehen ist.

2. Weicher, auf dem Kopf getragener Gegenstand (26) nach Anspruch 1, wobei die Härte des Materials 50 Shore A bis 60 Shore A beträgt.

3. Weicher, auf dem Kopf getragener Gegenstand (26) nach Anspruch 1 oder 2, wobei die Stützelemente (7) im Wesentlichen pyramidenförmig sind.

4. Weicher, auf dem Kopf getragener Gegenstand (26) nach einem der Ansprüche 1 bis 3, wobei die Höhe der Stützelemente (7) im Verhältnis zur Gesamtdicke der Elastomerplatte (2) 70 bis 90 % der Gesamtdicke der Elastomerplatte (2) beträgt.

5. Weicher, auf dem Kopf getragener Gegenstand (26) nach einem der Ansprüche 1 bis 4, wobei die Breite des Hohlraums (17) entlang der Tiefe des Hohlraums (17) gleichbleibend ist.

6. Weicher, auf dem Kopf getragener Gegenstand (26) nach einem der Ansprüche 1 bis 5, wobei das Volumen des Hohlraums (17) höchstens 50 % des Volumens des Stützelements (7) beträgt.

7. Weicher, auf dem Kopf getragener Gegenstand (26) nach einem der Ansprüche 1 bis 6, der ein Stirnband ist.

## Revendications

1. Article souple porté sur la tête (26) comprenant une feuille élastomère (2) d'une épaisseur comprise entre 5 mm et 20 mm, la feuille élastomère (2) ayant un premier côté (6) et un second côté (13), le premier côté (6) comporte plusieurs éléments de support déformables (7), les éléments de support (7) présentant une cavité (17) avec une ouverture vers le second côté (13) de la feuille élastomère (2), ou les éléments de support présentant une ouverture (11) entre le premier côté (6) et le second côté (13), et dans lequel la dureté du matériau de la feuille élastomère (2) est comprise entre 40 Shore A et 80 Shore A, **caractérisé en ce que** l'article souple porté sur la tête (26) comprend une couche intérieure (103) qui est conçue pour reposer contre la tête de l'utilisateur et une couche de maille (23) en contact avec la feuille élastomère (2) entre la feuille élastomère (2) et la couche intérieure (103) où la couche de maille (23) est prévue en contact avec les éléments de support (7).

2. Article souple porté sur la tête (26) selon la revendication 1, dans lequel la dureté du matériau est comprise entre 50 Shore A et 60 Shore A.

3. Article souple porté sur la tête (26) selon la revendication 1 ou 2, dans lequel les éléments de support (7) ont essentiellement une forme pyramidale.

4. Article souple porté sur la tête (26) selon l'une quelconque des revendications 1 à 3, dans lequel la hauteur des éléments de support (7) par rapport à l'épaisseur totale de la feuille élastomère (2) est comprise entre 70 et 90 % de l'épaisseur totale de la feuille élastomère (2).

5. Article souple porté sur la tête (26) selon l'une quelconque des revendications 1 à 4, dans lequel la largeur de la cavité (17) est identique le long de la profondeur de la cavité (17).

6. Article souple porté sur la tête (26) selon l'une quelconque des revendications 1 à 5, dans lequel le volume de la cavité (17) représente au maximum 50 % du volume de l'élément de support (7).

7. Article souple porté sur la tête (26) selon l'une quelconque des revendications 1 à 6, dans lequel ledit article est un bandeau pour la tête.
